# EUROPEAN PATENT SPECIFICATION

(11) **EP 3 968 572 B1**
(45) Date of publication and mention of the grant of the patent: **25.12.2024**
(21) Application number: 20195239.7
(22) Date of filing: 09.09.2020
(51) Int. Cl.: H04L 9/40, H04L 43/04, H04L 67/12

(54) **A METHOD FOR PROVIDING LOG ENTRIES**
VERFAHREN ZUR BEREITSTELLUNG VON PROTOKOLLEINTRÄGEN
PROCÉDÉ PERMETTANT DE FOURNIR DES ENTRÉES DE JOURNAL

(43) Date of publication of application: 16.03.2022
(73) Proprietor: VOLKSWAGEN AG, 38440 Wolfsburg (DE)
(72) Inventor: Bas, Frederik, 5262 EW Vught (NL)

(56) References cited:
- US-B1- 10 761 813
- US-B2- 10 498 749

## Description

The invention relates to a method for providing log entries of a system log. Furthermore, the invention relates to a system, a vehicle and a computer program product.

Modern electronic devices, which are used in vehicles for communication and entertainment, for example, may nowadays use a wide range of services from the internet. When the electronic device is used inside a vehicle, an OCU (Online Connectivity Unit) may establish the connection to the internet and to the internet services. However, sufficient safety measures must be taken when devices may have access to the internet. One safety tool is an intrusion detection system (IDS), which allows to monitor a network or systems for malicious activity or policy violations.

However, there may be delays in the logging and/or evaluation of the entries for various reasons. For example, when the electronic device is used inside the vehicle, IDS events may be logged via a Linux kernel system log. These log entries may afterwards be transferred to another control unit (ECU) via an asynchronous interface. Establishing a connection between this ECU and the OCU of the vehicle may be very time-consuming. This means that many log entries are already being generated and the interface may become overloaded. Therefore, the sufficient rapid logging and/or evaluation of entries may be problematic.

US 2002/0083343 A1 discloses a computer architecture for an IDS with a control agent to interface with a management system and for a monitoring of a system activity.

WO 2010/144815 A2 discloses an IDS for a vehicle.

US 10,761,813 B1 discloses a method to search and analyze data in different databases for pre-processing purposes.

US 10,498,749 B2 concerns a network in a vehicle.

It is therefore an object of the invention to at least partially eliminate the disadvantages mentioned above. Particularly, it is the object of the present invention to provide an improved method for the handling of log entries of a system log.

Aforesaid object is solved by a method according to independent claim 1, a system according to independent claim 13, a vehicle according to independent claim 14 and a computer program product according to independent claim 15. Further features and details of the present invention result from the dependent claims, the description and the drawings. Features and details discussed with respect to the method according to the invention also apply to the system, the vehicle and the computer program product, and vice versa.

According to a first aspect of the invention, a method (particularly computer-implemented method) is provided that is used to provide log entries (also termed protocol entries) of a system log (also termed system protocol, particularly of a system according to the invention). To this end, the following steps may be carried out, wherein particularly the steps of *"reading the log entries"* are performed at least partially simultaneously:
- Initiating, at a readout time (which may also be termed readout initiation time), a readout process using (at least or exactly) a first and a second readout information (at least partially) in parallel to read the log entries,
- Reading (particularly by the readout process) the log entries logged before the readout time using the first readout information,
- Reading (particularly by the readout process) the log entries logged after the readout time using the second readout information.

This has the advantage that it is not necessary to wait until the readout process completely has read the older log entries to read the newer (current) log entries, which would otherwise be the case when a sequential readout of the log entries is used. It may therefore be an idea, according to the invention, to use a non-sequential readout of log entries. The readout process is also not limited to provide either the older log entries or the current log entries. Instead, two readout information are used simultaneously, one may be used to read the older log entries and the other may be used to read the current log entries. Therefore, different time periods of the system log may be read at the same time.

It is also conceivable that the (at least or exactly) two readout results, also herein referred to as readout information, are each configured as a read pointer. In other words, instead of using only one read pointer, (at least or exactly) two read pointers may be used to perform the reading. Therefore, both read pointers are used in parallel. The parallel reading using both readout information may be partially (or fully) parallel (related to the time of execution). However, the parallel usage of the readout information by the readout process does not necessarily have to be accompanied by a parallel execution in the sense of parallel computing. Therefore, the readout process may be performed by a single processing unit, and only optionally by multiple processors (or processor cores). The parallel usage of the first and second readout information may also be implemented in a way that a single processor executes the steps of reading using the first and second readout information repeatedly one after the other. This does also cover the inventive idea of not being limited to reading the log entries one after the other exclusively from the older to the newer log entries, but to read different time periods of the log entries at the same time.

Each of the readout information is a (read) pointer. A pointer comprises an information with a reference to a particular log entry. Therefore, each of the pointers may point to a particular log entry. However, the two pointers - when used for reading - always point to different log entries. For the readout process, the pointers may be incremented, so that each pointer is used to read out log entries in a successive manner. Since the starting points of the pointers are different, after a particular amount of incrementations, the first pointer (i.e. the first readout information) reaches the starting point of the second pointer (i.e. the second readout information). After this, it is no longer necessary to use the first pointer (which may be released).

The system log may be stored in a log file (stored in a non-volatile memory of a computer system) and may comprise the automatically maintained log of all or certain actions of processes on the computer system. The system log may be configured as a system log (particularly kernel system log) of an operating system like Linux and/or a kernel log and/or a syslog application. The log entries may be logged by a processing system, wherein the log entries logged by the system prior to the reading or the readout time are regarded as historical log entries. The historical log entries may be relevant for a further evaluation; however, the current log entries may have a higher priority for this. Therefore, according to the invention, these different types of log entries (the historical and the current log entries) are particularly not read exclusively subsequentially but simultaneously.

The logging of the log entries may particularly be performed in the following way:
- Storing an information about an operation of the system in a non-volatile memory,
- Storing a timestamp about the time of detecting the information in the non-volatile memory.

For the storage of the information and the timestamp, both data elements may be saved in a common file, or in different files, which represent the system log. The timestamp may comprise a reference to the corresponding information and/or vice versa.

The readout time may be a point in time at which the system log is monitored by an IDS, particularly an IDS sensor, preferably in real time or at normal rate. In other words, the monitoring starts at the readout time. The log entries logged in a time period between the starting point of the first readout information and the second readout information may be regarded as backend for an analysis at a reduced rate. The log entries logged afterwards, i.e. following the starting point of the second readout information, may be regarded as backend for the analysis at a normal rate (higher than the reduced rate). Since the system log generates too much data at the startup before the monitoring begins, the usage of the two readout information may help to improve the further monitoring.

Furthermore, it is possible that the reading using the first readout information is performed with a lower rate than the reading using the second readout information. In other words, the log entries logged before the readout time are read with a lower speed by the readout process than the log entries logged after the readout time. Therefore, if the readout information is each regarded as pointer or reference to specific log entries, the first readout information is incremented with a lower rate than the second readout information during the readout process. This has the advantage that the different priorities of the log entries are considered. The incrementation may refer to a timestamp of the log entries.

It is possible that the first readout information is used to read historical log entries of the system log and the second readout information, in contrast to the first readout information, is used to read current log entries of the system log. This allows for considering both historical and current entries at the same time. It is not necessary to discard the older log entries to have an immediate consideration of the current log entries.

It may be provided that the reading is performed in such a way that an overlapping of log entries read out by using the first readout information and those read out by using the second readout information is prevented. It is not necessary to read out log entries twice. Therefore, it may be possible that the first readout information is not used anymore when it reaches the log entries of the second readout information.

It may be intended that the first readout information is used to start reading those log entries that were logged at an earlier point in time (than the readout time when the initiation began) and to continue reading to at least one log entry logged at the readout time to stop reading at this point. In other words, the reading using the first readout information may stop reading when it reaches the at least one log entry at the readout time.

It is also possible that the method steps are performed at a startup of the system according to the invention and/or of an intrusion detection system. Particularly, due to the delay at the startup, it is not possible to read the log entries in real time. Therefore, the inventive solution provides an improved way of reading the log entries.

The log entries may also be logged by a processing system, so that the log entries comprise information about an operation of the processing system, particularly of the operating system. Preferably, and particularly after the steps of reading, the (read out) log entries are saved and/or evaluated, and the operation of the processing system is adapted depending on the evaluation. The adaption of the operation may be an execution of security actions, which may be necessary when security problems are detected using the log entries.

Furthermore, it is possible that the processing system is part of a vehicle, and particularly the operation of the vehicle is adapted depending on the evaluation, wherein preferably the evaluation is performed by an intrusion detection system.

The processing system may be configured as a system according to the invention and/or may comprise at least a first and second processing unit, described as follows.

It may be intended that the steps of initiating and reading are carried out by a first (electronic) processing unit. Furthermore, it is possible that previously a connection for a data transmission is initiated between the first processing unit and a second (electronic) processing unit. The data transmission may be used for a transmission of the readout log entries. However, the initiation of the connection may cause a delay, so that it is useful to use two readout information at the same time.

It is also possible that the method steps are carried out by at least one (electronic) processing unit of a vehicle. The vehicle may use functions that are at least partially provided by the at least one processing unit. The at least one processing unit may comprise the first and second processing unit, as also described as follows.

In some embodiments, the initiating and reading are carried out by a first processing unit, whereupon the following is carried out:
- Transmitting the readout log entries, particularly via an asynchronous interface, to a second processing unit,
- Processing, particularly evaluating and/or logging, the transmitted log entries by the second processing unit.
For the operation of the system according to the invention or vehicle, it may be necessary that the log entries are passed over the asynchronous interface to the second processing unit. The interface and/or at least one of the processing units may each be configured as an electronic device. At least one of the processing units may be configured as an ECU (Electronic Control Unit) and may comprise a controller or microcontroller. Furthermore, the first or second processing unit may be configured as an OCU (Online Connectivity Unit). The moment that the second processing unit connects to the first processing unit via the interface may take a lot of time. This means that a lot of log entries (also termed as syslog entries) are already generated and may flood the interface. Therefore, the method according to the invention provides an improved way of reading as well the older log entries as the (often more relevant) current log entries. In other words, two read pointers (the first and second readout information) are used for the system log.

The first read pointer may be used for the reading from the beginning of the system log (historical events), particularly at a slow rate. The second read pointer may be used to directly log all current log entries. At a certain point in time, the first pointer will stop when it reaches the point where the second read pointer started.

If one of the processing units is configured as IDS (intrusion detection system), then the log entries may be configured as IDS events that are logged via the system log.

It is also possible that the processing system, and particularly at least one processing unit of the processing system, comprises at least one of the following devices:
- an intrusion detection system (IDS),
- an electronic control unit (ECU) of the vehicle,
- an online connectivity unit (OCU) for an or the ECU of the vehicle for providing mobile online services for the vehicle,
- an embedded computer system,
- a network interface for providing a connection via a network like a mobile network or the internet or local area network outside the vehicle,
- an internet interface for providing online services.

The OCU may also be termed an online or internet interface, which allows the internet/online functionalities to be used by the vehicle. The OCU may be used for the ECU to provide mobile online services for the vehicle, particularly for vehicle devices, preferably in a publish-subscribe messaging environment using different topics provided by various backend brokers. The vehicle devices may use the mobile online services by the OCU, such as sensor, safety, environment, information, entertainment and/or comfort devices, preferably configured to subscribe to the publish-subscribe messaging environment using different topics provided by various backend brokers. This has the advantage that different functions may be provided within the vehicle using flexible and adaptable online services. However, the usage of an OCU may require the implementation of an IDS for security reasons.

According to another aspect of the invention, a system for a vehicle is provided, comprising at least one processing unit, particularly data processing unit, for performing the steps of a method according to the invention. Also, a vehicle with a system according to the invention may be provided according to another aspect of the invention. The vehicle may be a motor vehicle, in particular a passenger or goods vehicle. Furthermore, the vehicle may be an electric vehicle and/or an autonomous vehicle.

According to another aspect of the invention, a computer program product, particularly computer program, may be provided comprising a program code for carrying out a method as described above. The computer program product comprises instructions which, when the program is executed by a computer, cause the computer to carry out embodiments of the method described above. The computer program product may be stored in a non-volatile data memory of embodiments of the system described above. Furthermore, the computer program product may be readout by the memory and executed by at least one processing unit to carry out the method according to the invention.

The invention and its further developments, as well as its advantages, will be explained in more detail below using figures. The figures show:
Fig. 1 a schematic visualization of a method according to an embodiment of the invention,
Fig. 2 another schematic visualization of a method according to an embodiment of the invention,
Fig. 3 a schematic representation of a vehicle and a system according to an embodiment of the invention,
Fig. 4 another schematic representation of a system according to an embodiment of the invention.

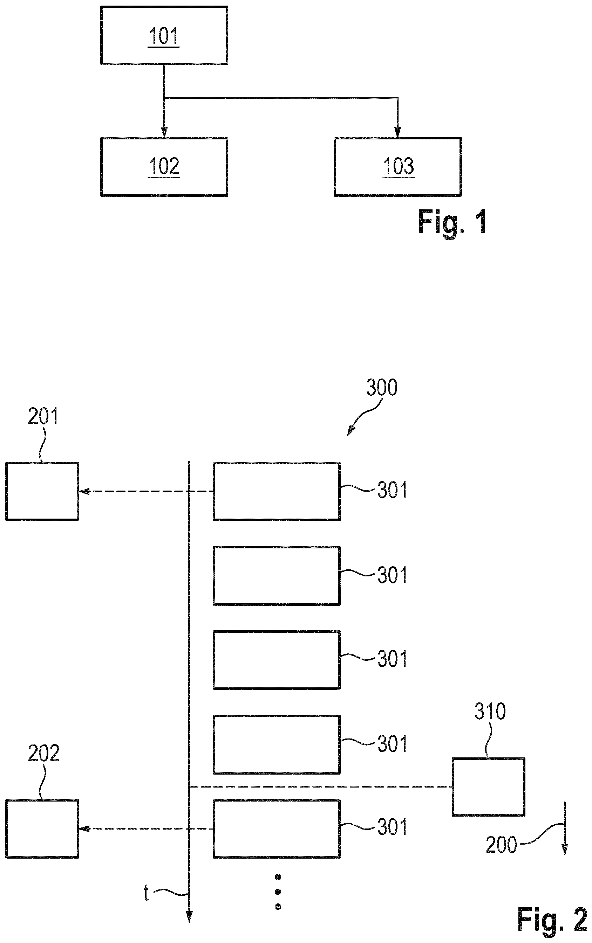

Figure 1 visualizes the steps of a method according to an embodiment of the invention. The method is intended for providing log entries 301 of a system log 300. First, an initiation 101 takes place at a readout time 310, which initiates a readout process 200. As shown in Figure 2, the readout process 200 uses a first readout information 201 and a second readout information 202 in parallel to read the log entries 301 of the system log 300. This subsequent reading of the log entries 301 using the first readout information and the second readout information is represented in Fig. 1 by reference numerals 102 and 103 respectively.

As also shown in Figure 2, the reading of the log entries 301 logged before the readout time 310 is performed by using the first readout information 201. The readout time 310 may be identified by using an electronic time component of the system, and the presence of a log before the readout time 310 may be identified by comparing a timestamp of the log entries 301 with the readout time 310. The reading of the log entries 301 logged after the readout time 310 is performed by using the second readout information 202. In other words, both pieces of readout information are used for performing both reading steps in parallel. Again, the presence of a log after the readout time 310 may be identified by comparing a timestamp of the log entries 301 with the readout time 310.

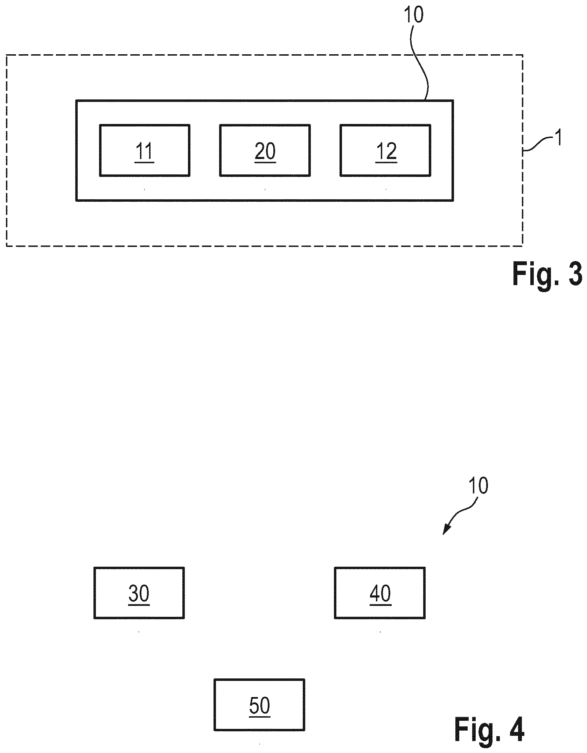

Figure 3 shows a system 10, particularly processing system 10, according to an embodiment of the invention, which may be part of a vehicle. The system 10 may comprise a first processing unit 11, a second processing unit 12 and an interface like an asynchronous interface 20 for a data transmission between the first processor unit 11 and the second processor unit 12. Furthermore, the system 10 may comprise the system log 300 in a non-volatile data memory.

Figure 4 shows a system 10 according to a further embodiment of the invention with more details. The system 10 may also comprise an electronic control unit (ECU) 40 and/or an online connectivity unit (OCU) 30 and/or an intrusion detection system (IDS) 50.

The system 10 may be configured as a vehicle-to-cloud system 10, which uses the OCU 30 to connect to online services that are used for functions of the vehicle 1. Therefore, the OCU 30 may be used to provide cloud services for the vehicle 1. However, this functionality requires the implementation of security functions, as for example provided by the IDS 50. Such security functions usually require the evaluation and logging of log entries 301 that provide information about the operation of the system 10. The method according to some embodiments of the invention may provide an improved way of reading these log entries 301.

The log entries 301 may be logged by the system 10 and may be specific for the operation of the system 10. This means, the log entries 301 may indicate errors, events and/or other information about the operation. This also allows for identifying security issues using the log entries 301, particularly by the IDS 50. In this case, the log entries 301 may be termed IDS events. The log entries 301 logged by the system 10 prior to the reading or the readout time 310, respectively, are regarded as historical log entries 301.

According to Figure 2, the first readout information 201 may be used to read historical log entries 301 of the system log 300 and the second readout information 202, in contrast to the first readout information 201, may be used to read current log entries 301 of the system log 300.

The reading by using the first readout information 201 may be performed with a lower rate than the reading by using the second readout information 202. This allows reading and/or logging and/or evaluating the current log entries 301 with a higher priority than the historical log entries 301.

Also, the reading may be performed in such a way that an overlapping of log entries 301 read out by using the first readout information 201 and those read out by using the second readout information 202 is prevented. According to Figure 2, this means that the reading using the first readout information 201 stops when it reaches the dashed line 310. Therefore, the first readout information 201 may be used to start reading those log entries 301 that were logged at an earlier point in time and to continue reading to at least one log entry 301 logged at the readout time 310 to stop reading at this point. This means, the reading is stopped when it reaches the at least one log entry at the readout time 310.

It may be provided that embodiments of the method are performed at a startup of an intrusion detection system 50. The log entries 301 may be logged by the system 10, so that the log entries 301 comprise information about an operation of the system 10. After the reading, the readout log entries 301 may be processed, particularly evaluated, preferably by the IDS 50.

The operation of the system 10 may be adapted depending on the processing or evaluation. For example, a warning message may be output to a user that a security issue is detected by using the evaluation. Also, the operation of the vehicle may be at least partially stopped as a reaction to the detection of a security issue by the evaluation of the log entries. Therefore, the rapid read out of current log entries and historical log entries in parallel may be crucial for a timely warning and initiation of other consequences.

In some applications, the readout may be delayed on startup. The initiating and reading may be carried out by a first processing unit 11, and (previously) a connection for a data transmission may have taken place between the first processing unit 11 and a second processing unit 12. The establishment of the connection may be responsible for the delay, so that a security issue cannot be detected in this period of time. The parallel read out of the log entries may mitigate such delay.

Initiating and reading may be carried out by a first processing unit 11, whereupon a transmission of the readout log entries 301, via an (for example asynchronous) interface 20, to a second processing unit 12 is performed. Afterwards, a processing and/or evaluating the transmitted log entries 301 by the second processing unit 12 is performed. This processing and/or evaluation may serve to detect security issues and/or may comprise a further logging of the log entries.

It is possible that the readout information 201, 202, particularly read pointer, may be used to read the log entries 301 simultaneously, but with a different clock rate. The first read pointer 201 may be used to start reading from the beginning (i.e. the historical events) at a slow rate, and the second read pointer 202 may be used to log the current events. At a given time t, the first read pointer 201 stops when it reaches the point where the second read pointer 202 started. In other words, the IDS 50 log is not transferred sequentially, but the current and historical events are read in parallel. This procedure adapts the reading of the log of a (particularly Linux) system 10 when the IDS 50 is started (i.e. the startup). Specifically, a Linux kernel log may be used for this (the "system logbook" or "syslog"). The method may, for example, be used for any embedded system 10 that requires an IDS 50, such as consumer electronics or loT (internet-of-things) devices.

As shown in Figures 3 and 4, the system 10, and particularly at least one processing unit 11, 12 of the system 10, may comprise at least one of the following devices:
- an intrusion detection system 50,
- an electronic control unit 40 of the vehicle 1,
- an online connectivity unit 30 for an electronic control unit 40 of the vehicle 1 for providing mobile online services for the vehicle,
- an embedded computer system,
- a network interface for providing a connection via a network outside the vehicle 1,
- an internet interface for providing online services.

The method described above, e.g. the embodiments depicted in figs. 1 and 2, may be carried out by a computer program product. The computer program product may comprise instructions which, when the program is executed by a computer, cause the computer to carry out embodiments of the method described above.

The above description of the figures describes the present invention only in the context of examples.

### Reference signs

- 1: vehicle

- 10: system
- 11: first processing unit
- 12: second processing unit

- 20: interface, asynchronous interface

- 30: online connectivity unit, OCU

- 40: electronic control unit, ECU

- 50: intrusion detection system, IDS

- 200: readout process

- 201: first readout information
- 202: second readout information

- 300: system log
- 301: log entries
- 310: readout time

- 101-103: method steps

- t: time

## Claims

1. A method for providing log entries (301) of a system log (300), the method comprising:
- Initiating, at a readout time (310), a readout process (200) using a first and a second readout information (201, 202) in parallel to read the log entries (301), wherein the readout information (201, 202) is a pointer comprising an information with a reference to a particular log entry (301),
- Reading the log entries (301) logged before the readout time (310) by using the first readout information (201),
- Reading the log entries (301) logged after the readout time (310) by using the second readout information (202).

2. The method according to claim 1,
wherein
the reading that uses the first readout information (201) is performed with a lower rate than the reading that uses the second readout information (202).

3. The method according to any one of the preceding claims 1 or 2,
wherein
the first readout information (201) is used to read historical log entries (301) of the system log (300) and the second readout information (202), in contrast to the first readout information (201), is used to read current log entries (301) of the system log (300).

4. The method according to any one of the preceding claims,
wherein
the reading is performed in such a way that an overlapping of log entries (301) read out by using the first readout information (201) and those read out by using the second readout information (202) is prevented.

5. The method according to any one of the preceding claims,
wherein
the first readout information (201) is used to start reading those log entries (301) that were logged at an earlier point in time and to continue reading to at least one log entry (301) logged at the readout time (310) to stop reading at this point.

6. The method according to any one of the preceding claims,
wherein
the method is performed at a start-up of an intrusion detection system (50).

7. The method according to any one of the preceding claims,
wherein
the log entries (301) are logged by a processing system (10), so that the log entries (301) comprise information about an operation of the processing system (10), wherein log entries (301) are evaluated, and the operation of the processing system (10) is adapted depending on the evaluation.

8. The method according to claim 7,
wherein
the processing system (10) is part of a vehicle (1), and the operation of the vehicle (1) is adapted depending on the evaluation, wherein the evaluation is performed by an intrusion detection system (50).

9. The method according to any one of the preceding claims,
wherein
the steps of initiating and reading are carried out by a first processing unit (11), and previously a connection for a data transmission is initiated between the first processing unit (11) and a second processing unit (12).

10. The method according to any one of the preceding claims,
wherein
the method steps are carried out by at least one processing unit (11, 12) of a vehicle (1).

11. The method according to any one of the preceding claims,
wherein
the steps of initiating and reading are carried out by a first processing unit (11), whereupon the following steps are carried out:
- Transmitting the read-out log entries (301), via an asynchronous interface (20), to a second processing unit (12),
- Processing the transmitted log entries (301) by the second processing unit (12).

12. The method according to any one of claims 7 to 11,
wherein
the processing system (10), and particularly at least one processing unit (11, 12) of the processing system (10), comprises at least one of the following devices:
- an intrusion detection system (50),
- an electronic control unit (40) of the vehicle (1),
- an online connectivity unit (30) for an electronic control unit (40) of the vehicle (1) for providing mobile online services for the vehicle,
- an embedded computer system,
- a network interface for providing a connection via a network outside the vehicle (1),
- an internet interface for providing online services.

13. A system (10) for a vehicle (1), comprising at least one processing unit (11, 12) for performing the steps of a method according to any one of the preceding claims 1 to 12.

14. A vehicle (1) with a system (10) according to claim 13.

15. A computer program product comprising a program code for carrying out a method according to any one of the preceding claims 1 to 12.

## Patentansprüche

1. Verfahren zur Bereitstellung von Protokolleinträgen (301) eines Systemprotokolls (300), wobei das Verfahren Folgendes umfasst:
- Initiieren, zu einer Auslesezeit (310), eines Ausleseprozesses (200) unter paralleler Verwendung einer ersten und einer zweiten Ausleseinformation (201, 202), um die Protokolleinträge (301) zu lesen, wobei es sich bei den Ausleseinformationen (201, 202) um einen Zeiger handelt, der eine Information mit einer Referenz auf einen bestimmten Protokolleintrag (301) umfasst,
- Lesen der vor der Auslesezeit (310) protokollierten Protokolleinträge (301) unter Verwendung der ersten Ausleseinformation (201),
- Lesen der nach der Auslesezeit (310) protokollierten Protokolleinträge (301) unter Verwendung der zweiten Ausleseinformation (202).

2. Verfahren nach Anspruch 1,
wobei das Auslesen, bei dem die erste Ausleseinformation (201) verwendet wird, mit einer geringeren Rate durchgeführt wird als das Auslesen, bei dem die zweite Ausleseinformation (202) verwendet wird.

3. System nach einem der vorhergehenden Ansprüche 1 oder 2,
wobei die erste Ausleseinformation (201) dazu verwendet wird, historische Protokolleinträge (301) des Systemprotokolls (300) zu lesen, und die zweite Ausleseinformation (202) im Gegensatz zu der ersten Ausleseinformation (201) dazu verwendet wird, aktuelle Protokolleinträge (301) des Systemprotokolls (300) zu lesen.

4. System nach einem der vorhergehenden Ansprüche, wobei das Auslesen derart durchgeführt wird, dass eine Überschneidung von unter Verwendung der ersten Ausleseinformation (201) ausgelesenen Protokolleinträgen (301) und jener unter Verwendung der zweiten Ausleseinformation (202) ausgelesenen verhindert wird.

5. Verfahren nach einem der vorhergehenden Ansprüche, wobei die erste Ausleseinformation (201) dazu verwendet wird, das Auslesen jener Protokolleinträge (301) zu beginnen, die zu einem früheren Zeitpunkt protokolliert wurden, und das Lesen zu mindestens einem zu der Auslesezeit (310) protokollierten Protokolleintrag (301) fortzusetzen, um an diesem Punkt das Lesen zu beenden.

6. Verfahren nach einem der vorhergehenden Ansprüche, wobei das Verfahren beim Starten eines Angriffserkennungssystems (50) durchgeführt wird.

7. Verfahren nach einem der vorhergehenden Ansprüche, wobei die Protokolleinträge (301) durch ein Verarbeitungssystem (10) protokolliert werden, sodass die Protokolleinträge (301) Informationen über einen Betrieb des Verarbeitungssystems (10) umfassen, wobei Protokolleinträge (301) ausgewertet werden und der Betrieb des Verarbeitungssystems (10) abhängig von der Auswertung angepasst wird.

8. Verfahren nach Anspruch 7,
wobei das Verarbeitungssystem (10) Teil eines Fahrzeugs (1) ist und der Betrieb des Fahrzeugs (1) abhängig von der Auswertung angepasst wird, wobei die Auswertung durch ein Angriffserkennungssystem (50) durchgeführt wird.

9. Verfahren nach einem der vorhergehenden Ansprüche, wobei die Schritte des Initiierens und Lesens durch eine erste Verarbeitungseinheit (11) ausgeführt werden und zuvor eine Verbindung für eine Datenübertragung zwischen der ersten Verarbeitungseinheit (11) und einer zweiten Verarbeitungseinheit (12) initiiert wird.

10. Verfahren nach einem der vorhergehenden Ansprüche, wobei die Verfahrensschritte durch mindestens eine Verarbeitungseinheit (11, 12) eines Fahrzeugs (1) ausgeführt werden.

11. Verfahren nach einem der vorhergehenden Ansprüche, wobei die Schritte des Initiierens und Lesens durch eine erste Verarbeitungseinheit (11) ausgeführt werden, woraufhin die folgenden Schritte ausgeführt werden:
- Übertragen der ausgelesenen Protokolleinträge (301) über eine asynchrone Schnittstelle (20) an eine zweite Verarbeitungseinheit (12),
- Verarbeiten der übertragenen Protokolleinträge (301) durch die zweite Verarbeitungseinheit (12).

12. Verfahren nach einem der Ansprüche 7 bis 11,
wobei das Verarbeitungssystem (10) und insbesondere mindestens eine Verarbeitungseinheit (11, 12) des Verarbeitungssystem (10) mindestens die folgenden Vorrichtungen umfasst:
- ein Angriffserkennungssystem (50),
- ein elektronisches Steuergerät (40) des Fahrzeugs (1),
- eine Online-Konnektivität-Einheit (30) für ein elektronisches Steuergerät (40) des Fahrzeugs (1) zur Bereitstellung mobiler Online-Dienste für das Fahrzeug,
- einen eingebettetes Computersystem,
- eine Netzwerkschnittstelle zur Bereitstellung einer Verbindung über ein Netzwerk außerhalb des Fahrzeugs (1),
- eine Internetschnittstelle zur Bereitstellung von Online-Diensten.

13. System (10) für ein Fahrzeug (1), umfassend mindestens eine Verarbeitungseinheit (11, 12) zum Durchführen der Schritte eines Verfahrens nach einem der Ansprüche 1 bis 12.

14. Fahrzeug (1) mit einem System (10) nach Anspruch 13.

15. Computerprogrammprodukt, umfassend einen Computerprogrammcode zum Ausführen eines Verfahrens nach einem der Ansprüche 1 bis 12.

## Revendications

1. Procédé de fourniture d'entrées de journal (301) d'un journal de marche (300), le procédé comprenant :
- le lancement, à un instant de lecture (310), d'un processus de lecture (200) en utilisant une première et une deuxième information de lecture (201, 202) en parallèle pour lire les entrées de journal (301), l'information de lecture (201, 202) étant un pointeur comprenant une information avec une référence à une entrée de journal (301) particulière,
- la lecture des entrées de journal (301) enregistrées avant l'instant de lecture (310) en utilisant la première information de lecture (201),
- la lecture des entrées de journal (301) enregistrées après l'instant de lecture (310) en utilisant la deuxième information de lecture (202).

2. Procédé selon la revendication 1,
la lecture qui utilise la première information de lecture (201) étant réalisée avec un débit plus faible que la lecture qui utilise la deuxième information de lecture (202) .

3. Procédé selon l'une quelconque des revendications précédentes 1 ou 2,
la première information de lecture (201) étant utilisée pour lire des entrées de journal (301) d'historique du journal de marche (300) et la deuxième information de lecture (202), en comparaison à la première information de lecture (201), étant utilisée pour lire des entrées de journal (301) actuelles du journal de marche (300).

4. Procédé selon l'une quelconque des revendications précédentes,
la lecture étant réalisée de telle manière à empêcher une superposition de lecture d'entrées de journal (301) en utilisant la première information de lecture (201) et de lecture de celles-ci en utilisant la deuxième information de lecture (202).

5. Procédé selon l'une quelconque des revendications précédentes,
la première information de lecture (201) étant utilisée pour démarrer la lecture des entrées de journal (301) qui ont été enregistrés plus tôt et pour poursuivre la lecture d'au moins une entrée de journal (301) enregistrée à l'instant de lecture (310) pour arrêter la lecture à ce stade.

6. Procédé selon l'une quelconque des revendications précédentes, le procédé étant réalisé à un démarrage d'un système de détection d'effraction (50).

7. Procédé selon l'une quelconque des revendications précédentes,
les entrées de journal (301) étant enregistrées par un système de traitement (10), de sorte que les entrées de journal (301) comprennent des informations concernant un fonctionnement du système de traitement (10), des entrées de journal (301) étant évaluées, et le fonctionnement du système de traitement (10) étant adapté en fonction de l'évaluation.

8. Procédé selon la revendication 7,
le système de traitement (10) faisant partie d'un véhicule (1), et le fonctionnement du véhicule (1) étant adapté en fonction de l'évaluation, l'évaluation étant réalisée par un système de détection d'effraction (50).

9. Procédé selon l'une quelconque des revendications précédentes,
les étapes de lancement et de lecture étant réalisées par une première unité de traitement (11), et précédemment, une connexion pour une transmission de données étant lancée entre la première unité de traitement (11) et une deuxième unité de traitement (12).

10. Procédé selon l'une quelconque des revendications précédentes,
les étapes de procédé étant réalisées par au moins une unité de traitement (11, 12) d'un véhicule (1).

11. Procédé selon l'une quelconque des revendications précédentes,
les étapes de lancement et de lecture étant réalisées par une première unité de traitement (11), après quoi les étapes suivantes sont réalisées :
- transmission des entrées de journal (301) lues, via une interface asynchrone (20), à une deuxième unité de traitement (12),
- traitement des entrées de journal (301) transmises par la deuxième unité de traitement (12).

12. Procédé selon l'une quelconque des revendications 7 à 11,
le système de traitement (10), et en particulier au moins une unité de traitement (11, 12) du système de traitement (10), comprenant au moins un des dispositifs suivants :
- un système de détection d'effraction (50),
- une unité de commande électronique (40) du véhicule (1) ,
- une unité de connexion en ligne (30) pour une unité de commande électronique (40) du véhicule (1) pour fournir des services mobiles en ligne pour le véhicule,
- un système informatique embarqué,
- une interface réseau pour fournir une connexion via un réseau extérieur au véhicule (1),
- une interface internet pour fournir des services en ligne.

13. Système (10) pour un véhicule (1), comprenant au moins une unité de traitement (11, 12) pour réaliser les étapes d'un procédé selon l'une quelconque des revendications précédentes 1 à 12.

14. Véhicule (1) avec un système (10) selon la revendication 13.

15. Produit programme informatique comprenant un code de programme pour mettre en œuvre un procédé selon l'une quelconque des revendications précédentes 1 à 12.
